Europäisches Patentamt

European Patent Office

Office européen des brevets

(11) Veröffentlichungsnummer: **0 389 946**

**A2**

## (12) EUROPÄISCHE PATENTANMELDUNG

(21) Anmeldenummer: 90105324.9

(51) Int. Cl.⁵: **G09B 29/00**

(22) Anmeldetag: 21.03.90

(30) Priorität: 25.03.89 DE 3909918

(43) Veröffentlichungstag der Anmeldung:
03.10.90 Patentblatt 90/40

(84) Benannte Vertragsstaaten:
CH DE FR GB IT LI NL SE

(71) Anmelder: HONEYWELL REGELSYSTEME
GMBH
Kaiserleistrasse 39
D-6050 Offenbach am Main(DE)

Anmelder: Krauss-Maffei Aktiengesellschaft
Krauss-Maffei-Strasse 2
D-8000 München 50(DE)

(72) Erfinder: Rothmann, Knut, Dipl.-Phys
Gustav-Hochstr. 52
D-6450 Hanau(DE)

Erfinder: Schmischke, Horst,
Albert-Schweitzer-Str. 11
D-6451 Neuberg(DE)
Erfinder: Wessendorf, Manfred, Dipl.-Ing.
Eichweg 3
D-6456 Langenselbold(DE)
Erfinder: Westermann, Harald Dipl.-Ing. (FH)
Ludwig-Dill-Str. 76
D-8060 Dachau(DE)
Erfinder: Dronzella, Norbert
Sebastian-Kneipp-Weg 22
D-8905 Mering(DE)

(74) Vertreter: Herzbach, Dieter et al
Honeywell Europe S.A. Holding KG Patent &
License Dept. Kaiserleistrasse 55 Postfach
10 08 65
D-6050 Offenbach am Main(DE)

(54) **Vorrichtung zur korrelierten Informationsdarstellung.**

(57) Es wird eine Vorrichtung zur korrelierten Darstellung einer ersten Information in Bezug auf eine gespeicherte zweite Information angegeben, die insbesondere als Fahrzeug-Navigationsvorrichtung verwendet werden kann, bei der die Position und die Richtung der Bewegung eines Fahrzeugs in Bezug auf eine Landkarte (5) angezeigt wird. Ein LCD-Display (3) ist vor der Landkarte (5) angeordnet und steht im Dialog mit einer Datenverarbeitungseinheit (4). Eine Bedienungsperson schaut durch das LCD-Display (3) auf die Landkarte (5), wobei eine ganze Reihe von Informationen auf dem LCD-Display dargestellt werden können.

EP 0 389 946 A2

Fig. 1

Die vorliegende Erfindung bezieht sich auf eine Vorrichtung zur korrelierten Darstellung einer ersten Information in Bezug auf eine gespeicherte zweite Information nach dem Gattungsbegriff des Patentanspruches 1.

Eine bekannte Vorrichtung dieser Art dient der Fahrzeugnavigation und benutzt eine in ein Gehäuse eingespannte Landkarte, über die ein Fadenkreuz zur Positionsanzeige und zur Anzeige der Bewegungsrichtung bewegt wird. Das Fadenkreuz besteht aus zwei sich rechtwinkelig kreuzenden, über einen Kartentisch gespannten Drähten, die über x- und y-Antriebe angesteuert werden. Die Ansteuerung der Antriebe erfolgt aus Navigationsdaten, so daß ausgehend von zu Beginn der Fahrt eingegebenen Anfangskoordinaten der jeweilige Fahrzeugort in der Landschaft durch das Fadenkreuz über der Landkarte angezeigt wird. Diese bekannte Fahrzeugnavigationsanlage gestattet lediglich die Anzeige der Position und der Bewegungsrichtung des Fahrzeuges in Bezug auf die Landkarte. Weitere Informationen, wie beispielsweise der Standort weiterer Fahrzeuge, Grenzlinien von Stellungen und die Höhe von Geländepunkten, an denen sich Fahrzeuge oder bestimmte Objekte befinden, können mit der bekannten Vorrichtung nicht angezeigt verden.

Natürlich ist es auch möglich, eine Landkarte zu digitalisieren und die Information pro Bildpunkt als Merkmalsvektor abzuspeichern. Bei einer Bildschirmdarstellung läßt sich dann die eigene Fahrzeugposition in den aus dem Speicher abgerufenen und dargestellten Kartenausschnitt einblenden, wobei auch Zusatzinformationen darstellbar sind. Der Aufwand zur Speicherung der in einer Landkarte enthaltenen Information ist aber sehr groß und diese Lösung ist daher sehr aufwendig. Ausgehend von dem eingangs geschilderten Stand der Technik ist es daher die Aufgabe der vorliegenden Erfindung, diese vorrichtung dahingehend zu verbessern, daß unter Verwendung einer Landkarte neben der Fahrzeugposition und der Bewegungsrichtung des Fahrzeugs weitere zusätzliche Informationen dargestellt und verarbeitet werden können. Die Lösung dieser Aufgabe gelingt gemäß den kennzeichnenden Merkmalen des Patentanspruches 1. Weitere vorteilhafte Ausgestaltungen der erfindungsgemäßen Vorrichtung sind den abhängigen Ansprüchen entnehmbar.

Die erfindungsgemäße Vorrichtung besitzt den Vorteil, daß einerseits die in der Landkarte enthaltene Informationsdichte und deren Störsicherheit erhalten bleibt, während andererseits durch die Verwendung eines Displays, unter dem die Landkarte sichtbar ist, eine Darstellung beliebig vieler variabler Zusatzinformationen möglich ist. Mit der erfindungsgemäßen Vorrichtung können vorhandene Vorrichtungen nachgerüstet werden, wobei die gefundene Lösung eine Optimierung des Aufwand/Nutzenverhältnisses mit sich bringt.

Anhand der Figuren der beiliegenden Zeichnung sei im folgenden ein Ausführungsbeispiel der Erfindung näher beschrieben. Es zeigen:

Fig. 1 das Grundprinzip der erfindungsgemäßen Vorrichtung;

Fig. 2 eine praktische Ausführungsform einer erfindungsgemäßen Vorrichtung; und

Fig. 3 eine Hardware-Konfiguration zum Betrieb der erfindungsgemäßen Vorrichtung.

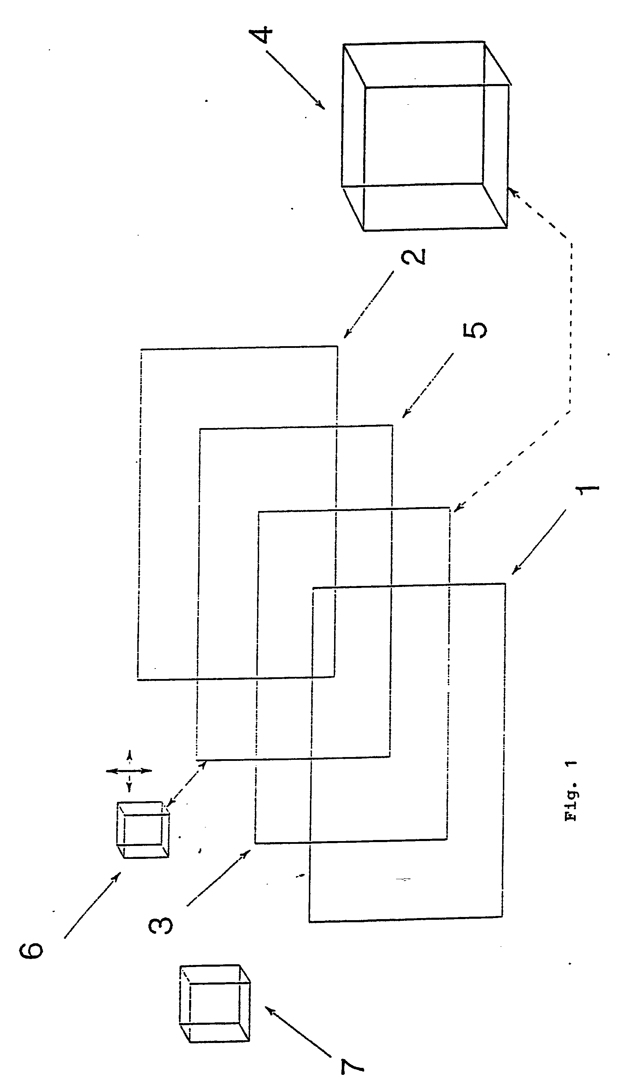

Gemäß Fig. 1 ist ein transparentes LCD-Display 3 in einen leicht demontierbaren Deckel 1 eines Gehäuses 2 eingebaut, wobei das Display von einer Datenverarbeitungsanlage 4 angesteuert wird. Die mechanische Anordnung des Gehauses ist so gewählt, daß ein handelsübliches Druckmedium 5 beispielsweise in Form einer Landkarte hinter dem LCD-Display, beispielsweise auf einem nicht-dargestellten Kartentisch fixiert und mittels einer Justagevorrichtung 6 mechanisch vorjustiert werden kann. Weiterhin enthält das Gehäuse 2 eine Lichtquelle 7 zur geeigneten Beleuchtung des LCD-Displays 3 und des Druckmediums 5.

Es ist ebenfalls möglich, ein Druckmedium (Landkarte) auf einem transparenten Film vorzusehen und diesen transparenten Film vor dem LCD-Display 3 anzuordnen. In diesem Fall vertauschen die Elemente 3 und 5 in Fig. 1 ihre Position.

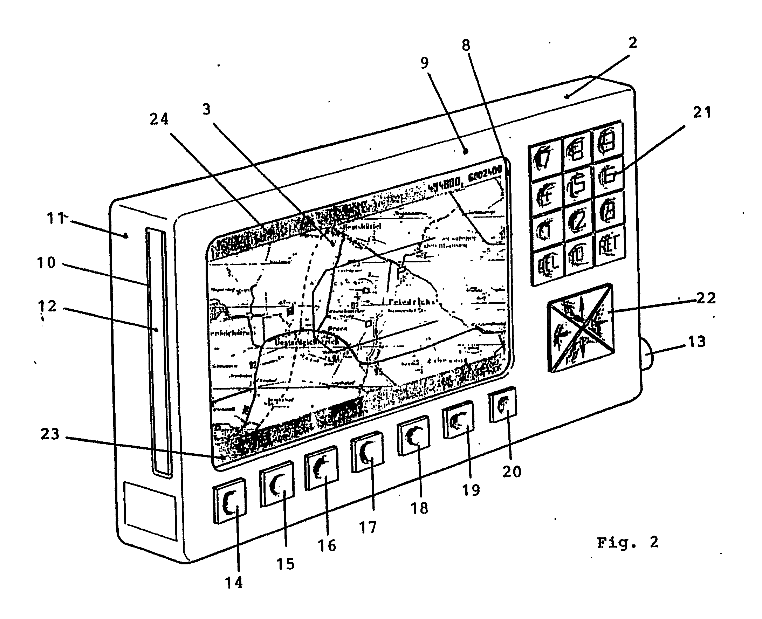

Gemäß Fig. 2 weist das Gehäuse 2 die Form eines Quaders auf, wobei ein Fenster 8 in der Vorderseite 9 angeordnet ist und das LCD-Diaplay 3 in dieses Fenster 8 eingesetzt ist. Ein sich in einer Seitenfläche 11 des Gehäuses 2 befindlicher und sich parallel zu dem Fenster 8 erstreckender Ausschnitt 10 dient der Aufnahme einer Trägervorrichtung 12 für die Landkarte 5. Die Landkarte 5 kann ebenfalls auf nicht-dargestellte Rollen aufgewickelt werden, wobei die sich dazwischen befindliche Trägervorrichtung 12 als Kartentisch dient und die Landkarte in enger Nachbarschaft zu dem LCD-Display 3 hält. Ein Stecker 13 dient der Verbindung der Vorrichtung mit der Datenverarbeitungseinheit 4. Eine Hintergrundbeleuchtung kann durch nicht-dargestellt Fluoreszenz-Kaltlichtröhren innerhalb des Gehäuses 2 erzielt werden.

Die Benutzeroberfläche des Gerätes umfaßt 7 Funktionstasten 14 bis 20 für den Aufruf eines Menüdialogs in Verbindung mit numerischen Tasten 21 und Cursortasten 22. Die Menütasten 14 bis 20 dienen der Steuerung verschiedener Funktionen, wie beispielsweise einer Justierung zwischen der Landkarte und dem LCD-Diaplay, der Unterdrückung bestimmter Symbole, der Positionierung von Symbolen usw.

Eine entsprechende Information wird auf dem LCD-Display in einer unteren und oberen Displayzone 23 und 24 angezeigt.

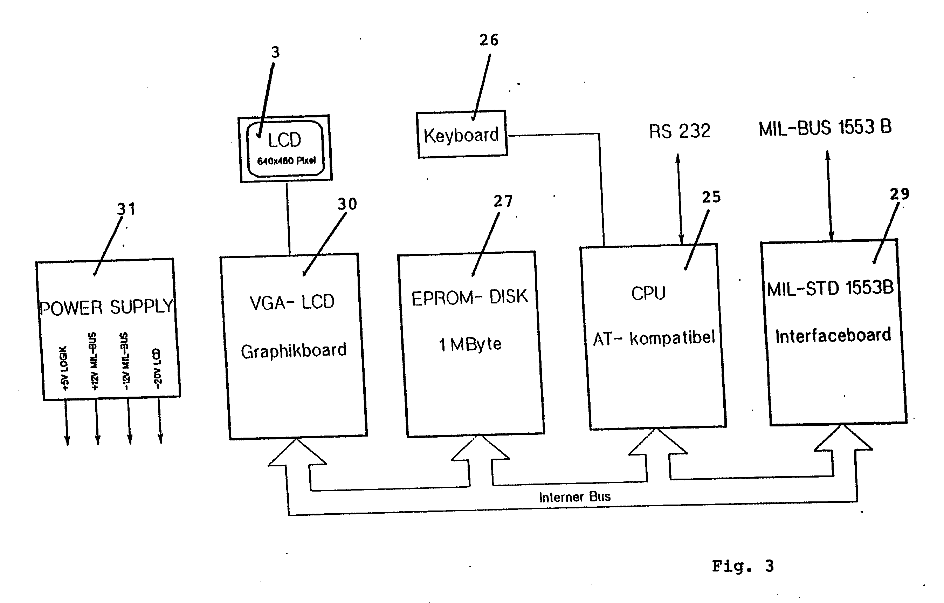

Fig. 3 zeigt die zur Steuerung der erfindungsgemäßen Anzeigevorrichtung verwendete Hardware-Konfiguration. Diese Hardware-Konfiguration umfaßt eine zentrale Verarbeitungseinheit 25 sowie eine mit dieser verbundene Tastatur 26. Die zentrale Verarbeitungseinheit 25 kann über eine RS232-Schnittstelle mit einer Funkstation verbunden sein. Die zentrale Verarbeitungseinheit 25 steht im Dialog mit einer Speichereinheit 27 über einen internen Bus 28. Der Bus 28 verbindet ferner über eine MIL-STD 155 3B Schnittstelle 29 eine nicht-dargestellte Navigationseinheit mit dem LCD-Display 3, wobei eine Graphikplatine 30 das LCD-Display 3 ansteuert. Eine Spannungsversorgungseinheit 31 dient der Versorgung aller angegebenen Komponenten.

## Ansprüche

1. Vorrichtung zur korrelierten Darstellung einer ersten Information in Bezug auf eine zweite auf einem bedruckten Medium gespeicherte Information, insbesondere Fahrzeug-Navigationsvorrichtung, **dadurch gekennzeichnet,** daß die erste Information auf einem Display (3) dargestellt wird, das an eine Datenverarbeitungseinheit (4) angeschlossen ist, wobei das bedruckte Medium (5) hinter oder vor dem Display (3) angeordnet ist.

2. Vorrichtung nach Anspruch 1, **gekennzeichnet durch** ein transparentes Display (3).

3. Vorrichtung nach Anspruch 1, **gekennzeichnet durch** die Verwendung eines graphikfähigen Displays (3).

4. Vorrichtung nach Anspruch 1, **gekennzeichnet durch** die Verwendung eines LCD-Displays (3).

5. Vorrichtung nach Anspruch 1, **dadurch gekennzeichnet,** daß das bedruckte Medium durch eine bedruckte transparente Folie vorgegeben ist, die vor dem Display (3) angeordnet ist.

6. Vorrichtung nach einem der Ansprüche 1 bis 5, **gekennzeichnet durch** eine Feinjustierung der auf dem Display (3) dargestellten Information durch Eingabe entsprechender Daten in die Datenverarbeitungsanlage (4).

7. Vorrichtung nach Anspruch 6, **gekennzeichnet durch** eine mechanische Justagevorrichtung (6) zur Relativverschiebung des bedruckten Mediums (5) in Bezug auf das Display (3).

8. Vorrichtung nach Anspruch 4, **gekennzeichnet durch** eine Lichtquelle (7) für die Beleuchtung des LCD-Displays (3) und des bedruckten Me-diums (5).

Fig. 1

EP 0 389 946 A2

Fig. 2

EP 0 389 946 A2

Fig. 3